# EUROPEAN PATENT APPLICATION

(11) **EP 4 185 058 A1**
(43) Date of publication of application: **24.05.2023**
(21) Application number: 22208199.4
(22) Date of filing: 17.11.2022
(51) Int. Cl.: H04W 72/27, H04W 84/18, H04W 84/22, H04W 92/20

(54) **ALLOCATING NETWORK RESOURCES TO A MESH NETWORK ACCESS POINT**

(30) Priority: 22.11.2021 US 202163281878 P
(71) Applicant: ARRIS ENTERPRISES, LLC, Suwanee, GA 30024 (US)
(72) Inventor: MATTAPARTI, Ravi Kiran, Sunnyvale, 94089 (US); BHATNAGAR, Hemant, Sunnyvale, 94089 (US); MALAVIYA, Virendra, Sunnyvale, 94089 (US)
(74) Representative: Openshaw & Co.

(57) **Abstract**

A root access point (RAP) that allocates network resources (such as airtimes) to two or more mess access points (MAPs) via in a mesh network is described. During operation, the RAP receives communication information associated with operation of the two or more MAPs. Then, the RAP allocates the network resources in the mesh network to the two or more MAPs based at least in part on the communication information. Note that the network resources may include use of a shared wireless medium. For example, the network resources may include airtimes of the two or more MAPs. Moreover, a first airtime of a first MAP in the two or more MAPs may be different from a second airtime of a second MAP in the two or more MAPs and/or one or more clients (such as one or more electronic devices) of the RAP

## Description

### FIELD

The described embodiments relate to techniques for communicating information in a mesh network. More specifically, the described embodiments relate to techniques for allocating network resources (such as airtimes) to mesh access points in a mesh network, which communicate with one or more root access points in the mesh network via mesh paths or links.

### BACKGROUND

Many electronic devices are capable of wirelessly communicating with other electronic devices. For example, these electronic devices can include a networking subsystem that implements a network interface for: a cellular network (UMTS, LTE, etc.), a wireless local area network (e.g., a wireless network such as described in the Institute of Electrical and Electronics Engineers (IEEE) 802.11 standard or Bluetooth from the Bluetooth Special Interest Group of Kirkland, Washington), and/or another type of wireless network.

One approach to wireless communication is to use a wireless mesh network (which is henceforth referred to as a `mesh network'). In a mesh network, multiple access points or MAPs (which are sometimes referred to as `nodes') are organized in a mesh topology in which electronic devices or clients communicate with each other via zero or more intermediate MAPs or nodes. The wireless clients served by a root access point (RAP) or root node via mesh paths/links can communicate to a packet data network (PDN), such as Internet and vice versa. Based on radio-frequency (RF) conditions, it often takes time to update routes (e.g., mesh link/path) in a mesh network to the MAPs. Therefore, the mesh-network topology is typically quasi-static. Overtime, the mesh paths through the mesh network converge, so data can be delivered to destinations optimally. Consequently, many mesh networks are a low-mobility centralized form of a wireless ad-hoc network.

In addition to multiple mesh paths through a mesh network, there are often multiple active links or paths to an external network, such as the Internet, via RAPs in the mesh network. This configuration allows packets or frames to be forwarded to external electronic devices, such as a switch, a router, or a controller.

Typically, a RAP in a mesh network treats the MAPs in the mesh network that communicate with the RAP via mesh paths or links as if they are clients of the RAP Moreover, the RAP usually allocates airtimes (or network resources) of a shared wireless medium equally to all its clients. However, consequently, the clients of some of the MAPs may have different communication performance (such as different throughputs) than the clients of the RAP or other MAPs in the mesh network. This variation in communication performance is often increased as the number of intermediate hops in the mesh network increases.

### SUMMARY

The invention is set out in the appended set of claims.

A RAP that communicates with two or more MAPs via two or more mesh paths in a mesh network is described. This RAP includes: one or more interface circuits that communicates with the two or more MAPs in the mesh network via mesh links/paths and one or more electronic devices in a wired network. Notably, during operation, the RAP receives communication information associated with operation of the two or more MAPs. Then, the RAP allocates network resources in the mesh network to the two or more MAPs based at least in part on the communication information.

In some embodiments, the allocation may be based at least in part on second communication information associated with operation of the RAP.

Note that the network resources may include or correspond to use of a shared wireless medium. For example, the network resources may include airtimes of the two or more MAPs. Moreover, a first airtime of a first MAP in the two or more MAPs may be different from a second airtime of a second MAP in the two or more MAPs and/or one or more clients of the RAP. The first airtime and the second airtime may ensure that clients of the first MAP and the second MAP have approximately the same or equal throughputs (and, more generally, communication performance).

Furthermore, the communication information may be received from the two or more MAPs. Alternatively, or additionally, the communication information may be received from a controller of the RAP (and optionally the two or more MAPs) or from a computer (such as a cloud-based computer).

In some embodiments, the RAP may determine the allocation of the network resources based at least in part on the communication information. Alternatively, or additionally, the RAP may: provide the communication information addressed to the controller or the computer; and receive information specifying the allocation from the controller or the computer.

Note that the communication information of a given MAP in the two or more MAPs may include: a number of clients of the given MAP; a received signal strength (such as a received signal strength indication or RSSI) of wireless signals associated with the RAP; modulation coding scheme (MCS) data rates; average throughput of the given MAP with clients of the given MAP; and/or a traffic type (such as voice over Internet protocol or VoIP, video, file download, etc.).

Moreover, the communication information may be received from a given MAP via a beacon associated with the given MAP using a vendor specific attribute. In some embodiments, the RAP may request the communication information using a second beacon that includes a request for the communication information.

Alternatively, the communication information may be received from a given MAP via a management frame or a control frame associated with the given MAP, e.g., using an information element. In some embodiments, the RAP may request the communication information using a second management frame or a second control frame that includes a request for the communication information. Note that the management frame and the second management frame (or the control frame or the second control frame) may be compatible with an inter-access-point protocol.

Furthermore, the RAP may communicate with a given MAP in the two or more MAPs wirelessly or using wired communication via a switch or a router. For example, the RAP may communicate with a first MAP in the two or more MAPs using wireless communication. The RAP may communicate with a second MAP in the two or more MAPs via the first MAP using wired communication. Note that the second MAP may be within a 1^{st} hop of the first MAP. Alternatively, the RAP may communicate with a first MAP in the two or more MAPs using wireless communication and may communicate with a second MAP in the two or more MAPs via the switch or router using wired communication.

Note that the communication may be compatible with an IEEE 802.11 communication protocol, such as: IEEE 802.11a, IEEE 802.11b, IEEE 802.11g, IEEE 802.11n, IEEE 802.11ac, IEEE 802.11ax, IEEE 802.11be, IEEE 802.11s, etc.

Another embodiment provides a computer-readable storage medium for use with the RAP or the given MAP. This computer-readable storage medium may include program instructions that, when executed by the RAP or the given MAP, cause the RAP or the given MAP to perform at least some of the aforementioned operations.

Another embodiment provides a method. This method includes at least some of the operations performed by the RAP or the given MAP.

This Summary is provided for purposes of illustrating some exemplary embodiments, so as to provide a basic understanding of some aspects of the subject matter described herein. Accordingly, it will be appreciated that the above-described features are examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE FIGURES

FIG. 1 is a block diagram illustrating an example of a system in accordance with an embodiment of the present disclosure.
FIG. 2 is a flow diagram illustrating an example method for allocating network resources in a mesh network in the system in FIG. 1 in accordance with an embodiment of the present disclosure.
FIG. 3 is a drawing illustrating an example of communication among electronic devices in FIG. 1 in accordance with an embodiment of the present disclosure.
FIG. 4 is a drawing illustrating an example of communication in a mesh network in the system in FIG. 1 in accordance with an embodiment of the present disclosure.
FIG. 5 is a drawing illustrating an example of communication in a mesh network in the system in FIG. 1 in accordance with an embodiment of the present disclosure.
FIG. 6 is a drawing illustrating an example of communication in a mesh network in the system in FIG. 1 in accordance with an embodiment of the present disclosure.
FIG. 7 is a block diagram illustrating an example of an electronic device in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

A RAP that allocates network resources (such as airtimes) to two or more MAPs via in a mesh network is described. During operation, the RAP receives communication information associated with operation of the two or more MAPs. Then, the RAP allocates the network resources in the mesh network to the two or more MAPs based at least in part on the communication information. In some embodiments, the allocation may be based at least in part on second communication information associated with operation of the RAP Note that the network resources may include use of a shared wireless medium. For example, the network resources may include airtimes of the two or more MAPs. Moreover, a first airtime of a first MAP in the two or more MAPs may be different from a second airtime of a second MAP in the two or more MAPs and/or one or more clients (such as one or more electronic devices) of the RAP.

By allocating the network resources, these communication techniques may improve communication performance in the mesh network. Notably, instead of allocating the airtimes equally to the two or MAPs and the one or more clients of the RAP, the communication techniques may allocate the airtimes to the two or more MAPs based at least in part on their loading, such as a number of clients of a given MAP in the two or more MAPs. The different allocated airtimes may ensure that clients of the first MAP and the second MAP have approximately the same (or equitable) performance/throughputs. Consequently, the communication techniques may improve the user experience when using an electronic device, a given MAP in the two or more MAPs, the RAP and communicating via the mesh network.

In the discussion that follows, electronic devices or components in a system communicate packets in accordance with a wireless communication protocol, such as: a wireless communication protocol that is compatible with an IEEE 802.11 standard (which is sometimes referred to as 'Wi-Fi^{®},' from the Wi-Fi Alliance of Austin, Texas), Bluetooth, and/or another type of wireless interface (such as another wireless-local-area-network interface). In some embodiments, the IEEE 802.11 standard or communication protocol may include one or more of: IEEE 802.11a, IEEE 802.11b, IEEE 802.11g, IEEE 802.11n, IEEE 802.11ac, IEEE 802.11ax, IEEE 802.11be, IEEE 802.11s or a future IEEE 802.11 standard. Moreover, an access point in the system may communicate with a controller, a computer (such as a cloud-based computer) or a service (e.g., via a gateway) using a wired communication protocol, such as a wired communication protocol that is compatible with an IEEE 802.3 standard (which is sometimes referred to as `Ethernet'), e.g., an Ethernet II standard. However, a wide variety of communication protocols may be used in the system, including wired and/or wireless communication. In the discussion that follows, Wi-Fi and Ethernet are used as illustrative examples.

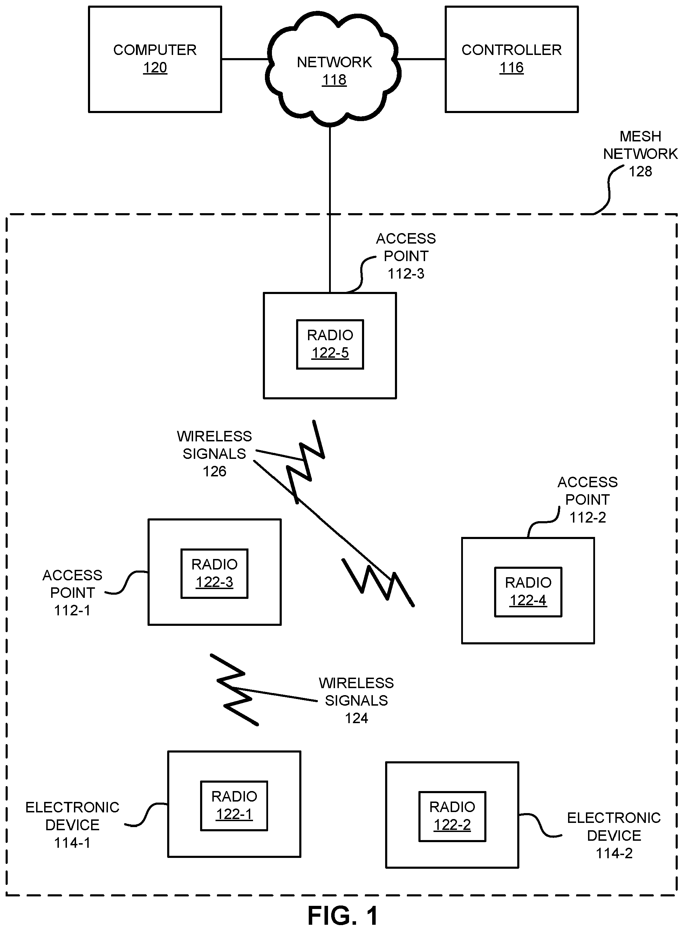

We now describe some embodiments of the communication techniques. FIG. 1 presents a block diagram illustrating an example of a system, which may include components, such as: access points 112, one or more electronic devices 114 (such as cellular telephones, stations or clients, another type of electronic device, etc.), one or more controller (such as controller 116) and/or one or more computers (such as computer 120). In this system, one or more of access points 112 may wirelessly communicate with one or more of the one or more electronic devices 114 using wireless communication that is compatible with an IEEE 802.11 standard. Thus, the wireless communication may occur in, e.g., a 2.4 GHz, a 5 GHz, a 6 GHz, 7 GHz and/or a 60 GHz frequency band. (Note that IEEE 802.1 1ad communication over a 60 GHz frequency band is sometimes referred to as `WiGig.' In the present discussion, these embodiments are also encompassed by `Wi-Fi.') However, a wide variety of frequency bands may be used. Moreover, access points 112 may communicate with controller 116 and/or computer 108 via network 118 (such as the Internet, an intra-net and/or one or more dedicated links). In addition, access points 112 may communicate with computer 120 via network 118. Note that controller 116 and/or computer 120 may be at the same location as the other components in the system or may be located remotely (i.e., at a different location, such as a cloud-based computer). Moreover, note that access points 112 may be managed and/or configured by controller 116. Furthermore, note that access points 112 may provide access to network 118 (e.g., via an Ethernet protocol), and may be a physical access point or a virtual or 'software' access point that is implemented on a computer or an electronic device. While not shown in FIG. 1, there may be additional components or electronic devices, such as a router or a switch.

Additionally, access points 112 and the one or more electronic devices 114 may communicate via wireless communication, and at least some of access points 112 may communicate with each other via wireless communication (such as via wireless signals 126). Notably, one or more of access points 112 and one or more of electronic devices 114 may wirelessly communicate while: transmitting advertising frames or packets on wireless channels, detecting one another by scanning wireless channels, exchanging subsequent data/management frames or packets (such as association requests and responses) to establish a connection, configure security options (e.g., Internet Protocol Security), transmit and receive frames or packets via the connection (which may include the association requests and/or additional information as payloads), etc.

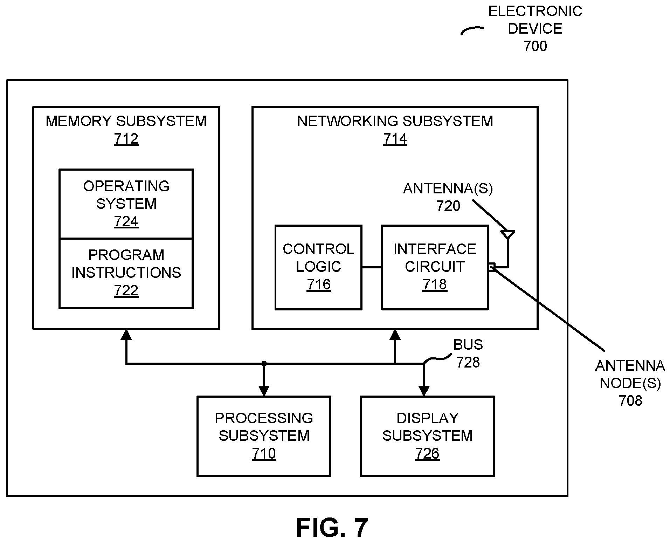

As described further below with reference to FIG. 7, access points 112, the one or more electronic devices 114, controller 116 and/or computer 120 may include subsystems, such as a networking subsystem, a memory subsystem and a processor subsystem. In addition, access points 112 and the one or more electronic devices 114 may include radios 122 in the networking subsystems. More generally, access points 112 and the one or more electronic devices 114 can include (or can be included within) any electronic devices with the networking subsystems that enable access points 112 and the one or more electronic devices 114 to wirelessly communicate with each other.

As can be seen in FIG. 1, wireless signals 124 (represented by a jagged line) are transmitted from a radio 122-1 in electronic device 114-1. These wireless signals are received by radio 122-3 in at least one of access points 112, such as access point 112-1. Notably, electronic device 114-1 may transmit frames or packets. In turn, these frames or packets may be received by access point 112-1. This may allow electronic device 114-1 to communicate information to access point 112-1. Note that the communication between, e.g., electronic device 114-1 and access point 112-1 may be characterized by a variety of performance metrics, such as: a data rate, a data rate for successful communication (which is sometimes referred to as a `throughput'), an error rate (such as a retry or resend rate), a mean-square error of equalized signals relative to an equalization target, intersymbol interference, multipath interference, a signal-to-noise ratio, a width of an eye pattern, a ratio of number of bytes successfully communicated during a time interval (such as 1-10 s) to an estimated maximum number of bytes that can be communicated in the time interval (the latter of which is sometimes referred to as the 'capacity' of a communication channel or link), and/or a ratio of an actual data rate to an estimated data rate (which is sometimes referred to as `utilization'). In some embodiments, the communication between, e.g., electronic device 114-1 and access point 112-1 may be characterized by an error-rate model, which compares the error rate during communication at the data rate. While instances of radios 122 are shown in the one or more electronic devices 114 and access points 112, one or more of these instances may be different from the other instances of radios 122.

As noted previously, access points 112 may be arranged in a mesh network 128. This mesh network may have a network topology in which access points 112 or nodes relay data in mesh network 128 and access points 112 cooperate in the distribution of data in mesh network 128. Notably, access points 112-1 and 112-2 may be MAPs, and access point 112-3 may be a RAP that is coupled to wired network 118. Access points 112-1 and 112-2 may wireless communicate with each other and/or access point 112-3 via mesh paths or links in mesh network 128. Moreover, in mesh network 128, a mesh path or link from an electronic device (such as electronic device 114-1) to a RAP (such as access point 112-3) may include at least one wireless connection that communicates information to or from electronic device 114-1 with network 118. For example, the mesh path from electronic device 114-1 and access point 112-1 may include zero or more additional MAPs or intermediary access points (or hops) in mesh network 128, such as access point 112-2. In some embodiments, mesh network 128 includes an access point (which is sometimes called an `Ethernet mesh electronic device') that communicates with another access point in mesh network 128 using Ethernet. Note that the MAP that is connected to another uplink MAP via Ethernet is sometimes referred to as an `Ethernet-MAP' or an `eMAP.'

In FIG. 1, while access points 112-1 and 112-2 have the 'option' to communicate with each other (because they are within communication or wireless range of each other) in a typical *IEEE* 802.11 network, the network design may involve operating elements that prevent a network loop condition. Thus, while it is ok to 'connect', from the perspective of network packet or frame forwarding, FIG. 1 should not be construed as to imply that a network loop condition exists if this condition is detrimental to the network. Note that the hierarchy (or tree) of access points 112 in mesh network 128 may dynamically change based at least in part on one or more of the communication-performance metrics of the mesh paths or links in mesh network 128, such as based on changes in a radio-frequency environment.

As noted previously, in a mesh network there can be imbalances in the communication performance for electronic devices that are associated with MAPs relative to electronic devices that are directly coupled to a given RAP. Notably, when access point 112-3 allocates network resources, such as airtimes, equally to access point 112-1, access point 112-2 and any clients of access point 112-3, the throughputs of clients of an access point (such as electronic device 114-1, which may be a client of access point 112-1) with a higher load may be reduced.

In order to address these challenges, access point 112-3 may perform the communication techniques. Notably, during operation, access point 112-3 may receive communication information associated with operation of access points 112-1 and 112-2. For example, the communication information may be received from access points 112-1 and 112-2 (such as periodically, e.g., every 100 ms, or as needed, such as when the communication information changes). Alternatively, or additionally, the communication information may be received from controller 116 or from computer 120 (such as periodically, e.g., every 100 ms, or as needed, such as when the communication information changes). Note that the communication information of a given access point in access points 112-1 and 112-2 may include: a number of clients of the given access point; a received signal strength (such as an RSSI) of wireless signals associated with access point 112-3; MCS rates; average throughput of the given access point with clients of the given access point; and/or a traffic type (such as VoIP, video, file download, etc.).

Moreover, access point 112-3 may determine an allocation of the network resources to access points 112-1 and 112-2 based at least in part on the communication information. Alternatively, or additionally, access point 112-3 may provide the communication information addressed to controller 116 and/or computer 120. Then, controller 116 and/or computer 120 may determine the allocation of the network resources based at least in part on the communication information. Next, access point 112-3 may receive information specifying the allocation of network resources from controller 116 and/or computer 120.

Then, access point 112-3 may allocate the network resources in the mesh network to access points 112-1 and 112-2 based at least in part on the communication information. In some embodiments, the allocation may be based at least in part on second communication information associated with operation of access point 112-3.

Note that the network resources may include or correspond to use of a shared wireless medium. For example, the network resources may include or may correspond to airtimes of access points 112-1 and 112-2. Moreover, a first airtime of access point 112-1 may be different from a second airtime of access point 112-1 and/or one or more clients of access point 112-3. The first airtime and the second airtime may ensure that clients of access point 112-1 (such as electronic device 114-1) and access point 112-2 have approximately the same (e.g., within 10%) or equitable/fair performance/throughputs. In some embodiments, the network resources may include: transmit opportunities; and/or resource units (such as different channels in orthogonal frequency division multiplexing or OFDM and/or orthogonal frequency division multiple access or OFDMA).

In some embodiments, the communication information may be received from a given access point via a beacon associated with the given access point using a vendor specific attribute. In some embodiments, access point 112-3 may request the communication information using a second beacon that includes a request for the communication information.

Alternatively, the communication information may be received from a given access point via a management frame or a control frame associated with the given access point, e.g., using an information element. In some embodiments, access point 112-3 may request the communication information using a second management frame or a second control frame that includes a request for the communication information. Note that the management frame and the second management frame (or the control frame or the second control frame) may be compatible with an inter-access-point protocol.

In these ways, access point 112-3 may use the communication techniques to improve communication performance in mesh network 128. Notably, access point 112-3 may allocate the network resources (such as airtimes) to access points 112-1 and 112-2 based at least in part on their loading, communication performances and/or (more generally) the communication information associated with operation of access points 112-1 and 112-2. Therefore, in general, the allocated network resources for access points 112-1 and 112-2 may be different from each other. Consequently, the communication techniques may improve the user experience when using electronic devices 114, access points 112 and communicating via mesh network 128.

In the described embodiments, processing a frame or a packet in one of access points 112 or a given one of the one or more electronic devices 114 may include: receiving wireless signals 124 with the frame or packet; decoding/extracting the frame or packet from the received wireless signals 124 to acquire the frame or packet; and processing the frame or packet to determine information contained in the frame or packet.

Although we describe the network environment shown in FIG. 1 as an example, in alternative embodiments, different numbers or types of electronic devices or components may be present. For example, some embodiments comprise more or fewer electronic devices or components. Therefore, in some embodiments there may be fewer or additional instances of at least some of access points 112, one or more electronic devices 114 controller 116 and/or computer 120. As another example, in another embodiment, different electronic devices are transmitting and/or receiving frames or packets.

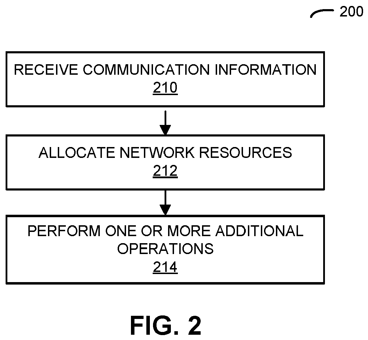

We now describe embodiments of the method. FIG. 2 presents an example of a flow diagram illustrating an example method 200 for allocating shared resources in a mesh network. Moreover, method 200 may be performed by a RAP, such as access point 112-3 in FIG. 1.

During operation, the RAP may receive communication information (operation 210) associated with operation of two or more MAPs in the mesh network. Note that the communication information of a given MAP in the two or more MAPs may include: a number of clients of the given MAP; a received signal strength (such as an RSSI) of wireless signals associated with the RAP; MCS data rates; average throughput of the given MAP with clients of the given MAP; and/or a traffic type (such as VoIP, video, file download, etc.).

Moreover, the communication information may be received from the two or more MAPs. Alternatively, or additionally, the communication information may be received from a controller of the RAP (and optionally the two or more MAPs) or from a computer (such as a cloud-based computer).

Then, the RAP may allocate network resources (operation 212) in the mesh network to the two or more MAPs based at least in part on the communication information. In some embodiments, the allocation is based at least in part on second communication information associated with operation of the RAP.

Note that the network resources may include or correspond to use of a shared wireless medium. For example, the network resources may include airtimes of the two or more MAPs. Moreover, a first airtime of a first MAP in the two or more MAPs may be different from a second airtime of a second MAP in the two or more MAPs and/or one or more clients of the RAP. The first airtime and the second airtime may ensure that clients of the first MAP and the second MAP have approximately the same or equal throughputs or, more generally, communication performance.

In some embodiments, the RAP may optionally perform one or more additional operations (operation 214). Notably, the RAP may determine the allocation of the network resources based at least in part on the communication information. Alternatively, or additionally, the RAP may: provide the communication information addressed to the controller or the computer; and receive information specifying the allocation from the controller or the computer.

Furthermore, the communication information may be received from a given MAP via a beacon associated with the given MAP using a vendor specific attribute. In some embodiments, the RAP may request the communication information using a second beacon that includes a request for the communication information.

Alternatively, the communication information may be received from a given MAP via a management frame or a control frame associated with the given MAP, e.g., using an information element. In some embodiments, the RAP may request the communication information using a second management frame or a second control frame that includes a request for the communication information. Note that the management frame and the second management frame (or the control frame or the second control frame) may be compatible with an inter-access-point protocol.

In some embodiments of method 200, there may be additional or fewer operations. Moreover, there may be different operations. Furthermore, the order of the operations may be changed, and/or two or more operations may be combined into a single operation.

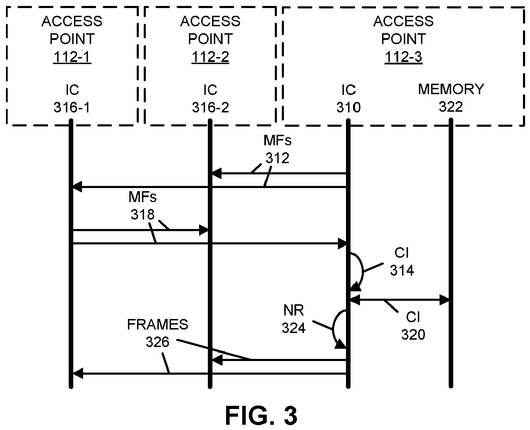

FIG. 3 presents a drawing illustrating an example of communication between access point 112-1, access point 112-2 and access point 112-3. In FIG. 3, interface circuit (IC) 310 in access point 112-1 (which may be a RAP in mesh network 128) may provide, to access points 112-2 and 112-3 (which may be MAPs in mesh network 128), management frames (MFs) 312 with requests for communication information (CI) 314 associated with operation of access points 112-1 and 112-2. In response, interface circuit 316 in access points 112-1 and 112-2 may provide management frames 318 with the requested communication information 314.

After receiving management frames 318, interface circuit 310 in access point 112-3 may extract communication information 314 from management frame 318. Then, interface circuit 310 may determine allocation of network resources (NR) 324 for access points 112-1 and 112-2 based at least in part on communication information 314. In some embodiments, the allocation is based at least in part on communication information 320 associated with operation of access point 112-3 (such as loading of access point 112-3). For example, interface circuit 310 may access communication information 320 in memory 322 in access point 112-3.

Next, interface circuit 310 may allocate network resources 324 to access points 112-1 and 112-2 based at least in part on the determined allocation. For example, interface circuit 310 may communicate one or more packets or frames 326 to access points 112-1 and 112-2 with information specifying the allocated network resources 324, such as airtimes and/or resource units used by access points 112-1 and 112-2.

While FIG. 3 illustrates some operations using unilateral or bilateral communication (which are, respectively, represented by one-sided and two-sided arrows), in general a given operation in FIG. 3 may involve unilateral or bilateral communication.

We now further describe embodiments of the communication techniques. As noted previously, the current airtime allocation to a MAP as client of RAP can adversely impact a wireless client served by the MAP, because the RAP typically treats its clients (including the MAP) equally.

Note that IEEE 802.11s is a wireless local area network (WLAN) standard for mesh networking, which defines how wireless electronic devices can interconnect to create a WLAN mesh network. This is often used for relatively fixed topologies and wireless ad-hoc networks. Moreover, IEEE 802.11s describes a wireless mesh network (WMN) with routing capabilities at the media access control (MAC) layer. Note that path selection is used to refer to MAC-address based routing and to differentiate it from conventional Internet protocol (IP) routing.

Typically, the WMN implements a single broadcast domain and, thus, integrates seamlessly with other IEEE 802.11-compatible networks. Notably, IEEE 802.11s supports transparent delivery of unicast, multicast and broadcast frames to destinations in- and outside of the mesh basic service set (MBSS) electronic devices that form the mesh network (which are sometimes referred to as `mesh stations,' `mesh STAs' or MAPs). MAPs usually forward frames wirelessly, but do not communicate with nonmesh stations. However, a MAP may be collocated with other IEEE 802.11 entities. IEEE 802.1 1s does not specify handling to optimize of the allocating of airtimes to MAPs that are 1, 2 etc. hops from the RAP (which is sometimes referred to as a `portal mesh station').

In the disclosed communication techniques, a RAP may, on its own or based at least in part on feedback from MAPs, a controller or cloud-based computer, allocate more airtime to a MAP, such that wireless clients connecting to the MAP will get close expected throughput/performance. In order to achieve this capability, a proprietary communication protocol may be used between the RAP and the MAP; and/or between the MAP and other subtending MAPs that are connected either via a wireless medium or a wired medium using an Ethernet cable, a switch or a router.

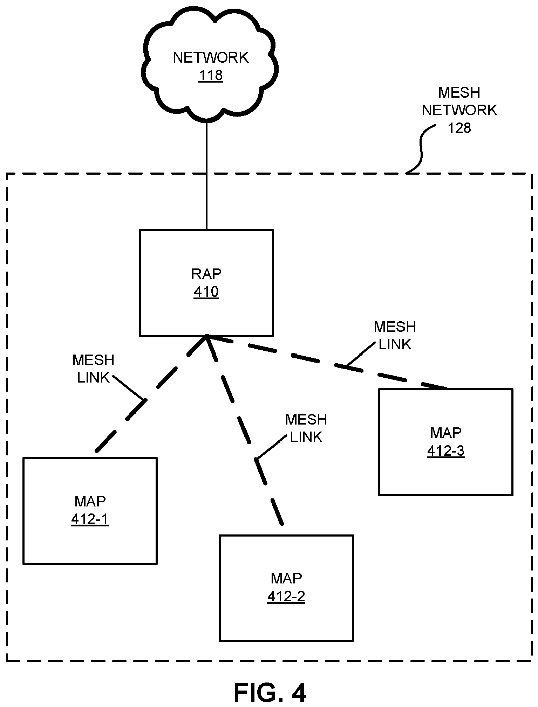

FIG. 4 presents a drawing illustrating an example of communication in mesh network 128. Notably, a RAP 410 (such as access point 112-3) may allocate airtimes fairly and equitably to MAPs 412 (such as access points 112-1 and 112-2) based at least in part on communication information associated with operation of MAPs 412. These allocations may ensure that each of MAPs 412 can provide a good service to their wireless clients.

In some embodiments, RAP 410 may allocate airtime to a given MAP based at least in part on: a number of clients of the given MAP; an RSSI associated with RAP 410 as determined by the given MAP; MCS data rates of the given MAP (e.g., since the last reporting to RAP 410); an average throughput that the given MAP delivered to its wireless clients; and/or a traffic type (such as VoIP, video, file download, etc.). Based at least in part on its current load, RAP 410 may use this communication information to determine whether to allocate/reserve more airtime to the given MAP. For example, RAP 410 may reserve/allocate 20% more airtime to better serve the wireless clients of the given MAP without sacrificing the throughput of the clients of RAP 410.

Note that RAP 410 may build heuristics or a predictive model (such as a supervised-learning model or a neural network), so that RAP 410 can more accurately allocate airtime to the given MAP in the future.

Alternatively, or additionally, RAP 410 may send training information (e.g., the communication information associated with MAPs 412, communication information of RAP 410, airtime allocations made by RAP 410, etc.) to controller 116 and/or computer 120, so that controller 116 and/or computer 120 can build the heuristics or the predictive model, so that controller 116, computer 120 and/or RAP 410 can more accurately allocate airtime to the given MAP in the future. When the allocations are determined by controller 116 and/or computer 120, controller 116 and/or computer 120 may provide instructions or recommendations to RAP 410 about the airtime allocations.

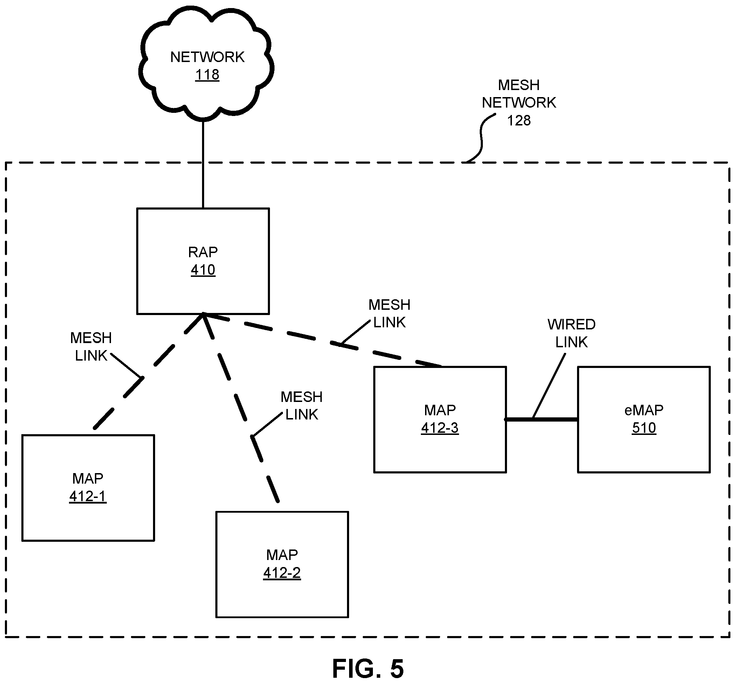

In some embodiments, at least one eMAP communicates with the RAP via wired communication with an intermediate MAP. This is shown in FIG. 5, which presents a drawing illustrating an example of communication in mesh network 128. Notably, eMAP 510 may communicate with MAP 412-3 via wired communication, e.g., via an Ethernet cable. Note that eMAP 510 may be within one hop of MAP 412-3. In these embodiments, RAP 410 may receive communication information associated with operation of MAPs 412 and eMAP 510. Based at least in part on its current load, radio-frequency (RF) conditions, and the communication information, RAP 410 may allocate airtimes to MAPs 412 and eMAP 510. These airtime allocations may ensure that clients of eMAP 510 experience good throughput and, more generally, good wireless service. Note that RAP 410 may send training data to controller 116 and/or computer 120, and controller 116 and/or computer 120 may determine the airtime allocations and may provide instructions or recommendation to RAP 410.

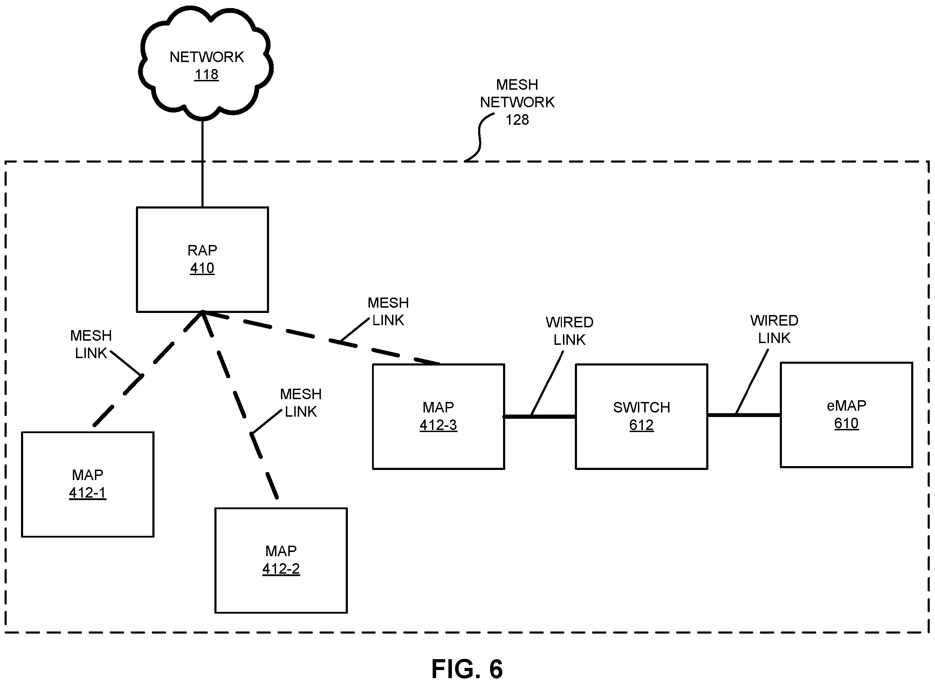

In some embodiments, at least one eMAP communicates with the RAP via wired communication and a switch or a router. This is shown in FIG. 6, which presents a drawing illustrating an example of communication in mesh network 128. Notably, eMAP 610 may communicate with MAP 412-3 via wired communication, e.g., via an Ethernet cable, and router or switch 612. Thus, switch 612 may be connected to a wired (e.g., Ethernet) port of MAP 412-3, and switch 612 may have one or more additional MAPs connected to it (such as eMAP 610).

Moreover, RAP 410 may receive communication information associated with operation of MAPs 412 and eMAP 610. Based at least in part on its current load, radio-frequency (RF) conditions, and the communication information, RAP 410 may allocate airtimes to MAPs 412 and eMAP 610. These airtime allocations may ensure that clients of eMAP 610 experience good throughput and, more generally, good wireless service. Note that RAP 410 may send training data to controller 116 and/or computer 120, and controller 116 and/or computer 120 may determine the airtime allocations and may provide instructions or recommendation to RAP 410.

Furthermore, RAP 410 may receive the communication information via beacons, management frames or control frames. For example, RAP 410 may provide a beacon with a vendor specific attribute requesting communication information from a given MAP. In response, the given MAP may provide a beacon with the communication information associated with the given MAP. Note that the beacons may be provided periodically, such as every 100 ms.

Alternatively, or additionally, RAP 410 may provide a management frame or a control frame with an information element requesting communication information from a given MAP. In response, the given MAP may provide a management frame or a control frame with the communication information associated with the given MAP. Note that the management frames or the control frames may be provided periodically, such as every 100 ms. In some embodiments, the management frames or the control frames may be compatible with an inter-access-point protocol.

We now describe embodiments of an electronic device, which may perform at least some of the operations in the communication techniques. For example, the electronic device may include a component in the system in FIG. 1, such as one of: access points 112, one or more electronic devices 114, controller 116 and/or computer 120. FIG. 7 presents a block diagram illustrating an electronic device 700 in accordance with some embodiments. This electronic device includes processing subsystem 710, memory subsystem 712, and networking subsystem 714. Processing subsystem 710 includes one or more devices configured to perform computational operations. For example, processing subsystem 710 can include one or more microprocessors, ASICs, microcontrollers, programmable-logic devices, graphical processor units (GPUs) and/or one or more digital signal processors (DSPs).

Memory subsystem 712 includes one or more devices for storing data and/or instructions for processing subsystem 710 and networking subsystem 714. For example, memory subsystem 712 can include dynamic random-access memory (DRAM), static random-access memory (SRAM), and/or other types of memory (which collectively or individually are sometimes referred to as a `computer-readable storage medium'). In some embodiments, instructions for processing subsystem 710 in memory subsystem 712 include: one or more program modules or sets of instructions (such as program instructions 722 or operating system 724), which may be executed by processing subsystem 710. Note that the one or more computer programs may constitute a computer-program mechanism. Moreover, instructions in the various modules in memory subsystem 712 may be implemented in: a high-level procedural language, an object-oriented programming language, and/or in an assembly or machine language. Furthermore, the programming language may be compiled or interpreted, e.g., configurable or configured (which may be used interchangeably in this discussion), to be executed by processing subsystem 710.

In addition, memory subsystem 712 can include mechanisms for controlling access to the memory. In some embodiments, memory subsystem 712 includes a memory hierarchy that comprises one or more caches coupled to a memory in electronic device 700. In some of these embodiments, one or more of the caches is located in processing subsystem 710.

In some embodiments, memory subsystem 712 is coupled to one or more highcapacity mass-storage devices (not shown). For example, memory subsystem 712 can be coupled to a magnetic or optical drive, a solid-state drive, or another type of mass-storage device. In these embodiments, memory subsystem 712 can be used by electronic device 700 as fast-access storage for often-used data, while the mass-storage device is used to store less frequently used data.

Networking subsystem 714 includes one or more devices configured to couple to and communicate on a wired and/or wireless network (i.e., to perform network operations), including: control logic 716, an interface circuit 718 and one or more antennas 720 (or antenna elements). (While FIG. 7 includes one or more antennas 720, in some embodiments electronic device 700 includes one or more antenna nodes, connectors or pads, such as nodes 708, e.g., an antenna node, a connector or a pad, which can be coupled to the one or more antennas 720. Thus, electronic device 700 may or may not include the one or more antennas 720.) For example, networking subsystem 714 can include a Bluetooth networking system, a cellular networking system (e.g., a 3G/4G/5G network such as UMTS, LTE, etc.), a USB networking system, a networking system based on the standards described in IEEE 802.11 (e.g., a Wi-Fi networking system), an Ethernet networking system, and/or another networking system.

In some embodiments, a transmit antenna radiation pattern of electronic device 700 may be adapted or changed using pattern shapers (such as reflectors) in one or more antennas 720 (or antenna elements), which can be independently and selectively electrically coupled to ground to steer the transmit antenna radiation pattern in different directions. Thus, if one or more antennas 720 includes N antenna-radiation-pattern shapers, the one or more antennas 720 may have 2^{N} different antenna-radiation-pattern configurations. More generally, a given antenna radiation pattern may include amplitudes and/or phases of signals that specify a direction of the main or primary lobe of the given antenna radiation pattern, as well as so-called `exclusion regions' or `exclusion zones' (which are sometimes referred to as 'notches' or `nulls'). Note that an exclusion zone of the given antenna radiation pattern includes a low-intensity region of the given antenna radiation pattern. While the intensity is not necessarily zero in the exclusion zone, it may be below a threshold, such as 3 dB or lower than the peak gain of the given antenna radiation pattern. Thus, the given antenna radiation pattern may include a local maximum (e.g., a primary beam) that directs gain in the direction of an electronic device that is of interest, and one or more local minima that reduce gain in the direction of other electronic devices that are not of interest. In this way, the given antenna radiation pattern may be selected so that communication that is undesirable (such as with the other electronic devices) is avoided to reduce or eliminate adverse effects, such as interference or crosstalk.

Networking subsystem 714 includes processors, controllers, radios/antennas, sockets/plugs, and/or other devices used for coupling to, communicating on, and handling data and events for each supported networking system. Note that mechanisms used for coupling to, communicating on, and handling data and events on the network for each network system are sometimes collectively referred to as a `network interface' for the network system. Moreover, in some embodiments a 'network' or a 'connection' between the electronic devices does not yet exist. Therefore, electronic device 700 may use the mechanisms in networking subsystem 714 for performing simple wireless communication between the electronic devices, e.g., transmitting frames and/or scanning for frames transmitted by other electronic devices.

Within electronic device 700, processing subsystem 710, memory subsystem 712, and networking subsystem 714 are coupled together using bus 728. Bus 728 may include an electrical, optical, and/or electro-optical connection that the subsystems can use to communicate commands and data among one another. Although only one bus 728 is shown for clarity, different embodiments can include a different number or configuration of electrical, optical, and/or electro-optical connections among the subsystems.

In some embodiments, electronic device 700 includes a display subsystem 726 for displaying information on a display, which may include a display driver and the display, such as a liquid-crystal display, a multi-touch touchscreen, etc.

Electronic device 700 can be (or can be included in) any electronic device with at least one network interface. For example, electronic device 700 can be (or can be included in): a desktop computer, a laptop computer, a subnotebook/netbook, a server, a computer, a mainframe computer, a cloud-based computer, a tablet computer, a smartphone, a cellular telephone, a smartwatch, a wearable device, a consumer-electronic device, a portable computing device, an access point, a transceiver, a controller, a radio node, a router, a switch, communication equipment (such as an Evolved Node B or eNodeB, a next generation Node-B or Ng-NodeB and, more generally, a base station in a cellular-telephone network), a wireless dongle, test equipment, and/or another electronic device.

Although specific components are used to describe electronic device 700, in alternative embodiments, different components and/or subsystems may be present in electronic device 700. For example, electronic device 700 may include one or more additional processing subsystems, memory subsystems, networking subsystems, and/or display subsystems. Additionally, one or more of the subsystems may not be present in electronic device 700. Moreover, in some embodiments, electronic device 700 may include one or more additional subsystems that are not shown in FIG. 7. Also, although separate subsystems are shown in FIG. 7, in some embodiments some or all of a given subsystem or component can be integrated into one or more of the other subsystems or component(s) in electronic device 700. For example, in some embodiments program instructions 722 are included in operating system 724 and/or control logic 716 is included in interface circuit 718.

Moreover, the circuits and components in electronic device 700 may be implemented using any combination of analog and/or digital circuitry, including: bipolar, PMOS and/or NMOS gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit (which is sometimes referred to as a `communication circuit' or a `means for communication') may implement some or all of the functionality of networking subsystem 714 (and, more generally, of electronic device 700). The integrated circuit may include hardware and/or software mechanisms that are used for transmitting wireless signals from electronic device 700 and receiving signals at electronic device 700 from other electronic devices. Aside from the mechanisms herein described, radios are generally known in the art and hence are not described in detail. In general, networking subsystem 714 and/or the integrated circuit can include any number of radios. Note that the radios in multiple-radio embodiments function in a similar way to the described single-radio embodiments.

In some embodiments, networking subsystem 714 and/or the integrated circuit include a configuration mechanism (such as one or more hardware and/or software mechanisms) that configures the radio(s) to transmit and/or receive on a given communication channel (e.g., a given carrier frequency). For example, in some embodiments, the configuration mechanism can be used to switch the radio from monitoring and/or transmitting on a given communication channel to monitoring and/or transmitting on a different communication channel. (Note that 'monitoring' as used herein comprises receiving signals from other electronic devices and possibly performing one or more processing operations on the received signals)

In some embodiments, an output of a process for designing the integrated circuit, or a portion of the integrated circuit, which includes one or more of the circuits described herein may be a computer-readable medium such as, for example, a magnetic tape or an optical or magnetic disk. The computer-readable medium may be encoded with data structures or other information describing circuitry that may be physically instantiated as the integrated circuit or the portion of the integrated circuit. Although various formats may be used for such encoding, these data structures are commonly written in: Caltech Intermediate Format (CIF), Calma GDS II Stream Format (GDSII), Electronic Design Interchange Format (EDIF), OpenAccess (OA), or Open Artwork System Interchange Standard (OASIS). Those of skill in the art of integrated circuit design can develop such data structures from schematics of the type detailed above and the corresponding descriptions and encode the data structures on the computer-readable medium. Those of skill in the art of integrated circuit fabrication can use such encoded data to fabricate integrated circuits that include one or more of the circuits described herein.

While the preceding discussion used Wi-Fi and/or Ethernet communication protocols as illustrative examples, in other embodiments a wide variety of communication protocols and, more generally, communication techniques may be used. Thus, the communication techniques may be used in a variety of network interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations in the communication techniques may be implemented using program instructions 722, operating system 724 (such as a driver for interface circuit 718) or in firmware in interface circuit 718. Alternatively, or additionally, at least some of the operations in the communication techniques may be implemented in a physical layer, such as hardware in interface circuit 718.

Additionally, while the preceding embodiments illustrated the use of wireless signals in one or more bands of frequencies, in other embodiments of these signals may be communicated in one or more bands of frequencies, including: a microwave frequency band, a radar frequency band, 900 MHz, 2.4 GHz, 5 GHz, 6 GHz, 7 GHz, 60 GHz, and/or a band of frequencies used by a Citizens Broadband Radio Service or by LTE (and, more generally, a band of frequencies used to communicate data, e.g., in a cellular-telephone network, such as a microcell, a small cell, etc.). In some embodiments, the communication between electronic devices uses multi-user transmission, such as OFDM and/or OFDMA.

In the preceding description, we refer to 'some embodiments.' Note that 'some embodiments' describes a subset of all of the possible embodiments but does not always specify the same subset of embodiments. Moreover, note that numerical values in the preceding embodiments are illustrative examples of some embodiments. In other embodiments of the communication techniques, different numerical values may be used.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed.

## Claims

1. A root access point, RAP (112-3), comprising:
one or more interface circuits (718) configured to communicate with at least two mesh access points, MAPs (112-1, 112-2), in a mesh network (128) and one or more electronic devices in a wired network (118), wherein the RAP is configured to:
receive (210) communication information (314) associated with operation of the two or more MAPs; and
allocate (212) network resources (324) in the mesh network to the two or more
MAPs based at least in part on the communication information.

2. The RAP of claim 1, wherein the allocation is based at least in part on second communication information (320) associated with operation of the RAP.

3. The RAP of any one of claims 1-2, wherein the network resources comprise airtimes of the two or more MAPs.

4. The RAP of claim 3, wherein a first airtime of a first MAP in the two or more MAPs is different from a second airtime of a second MAP in the two or more MAPs.

5. The RAP of claim 4, wherein the first airtime and the second airtime ensure that clients of the first MAP and the second MAP have approximately the same or equal communication performance.

6. The RAP of any preceding claim, wherein the communication information is received from the two or more MAPs.

7. The RAP of any preceding claim, wherein the communication information is received from a controller (116) of the RAP or from a computer (120).

8. The RAP of any preceding claim, wherein the RAP is configured to determine the allocation of the network resources based at least in part on the communication information.

9. The RAP of any preceding claim, wherein the RAP is configured to:
provide the communication information addressed to a controller of the RAP or a computer; and
receive information specifying the allocation from the controller or the computer.

10. The RAP of any preceding claim, wherein the communication information of a given MAP in the two or more MAPs comprises: a number of clients of the given MAP; a received signal strength of wireless signals associated with the RAP; modulation coding scheme, MCS, data rates; average throughput of the given MAP with clients of the given MAP; or a traffic type.

11. The RAP of any preceding claim, wherein the communication information is received from a given MAP via a beacon associated with the given MAP using a vendor specific attribute, or via a management frame or a control frame associated with the given MAP.

12. The RAP of claim 11, wherein the RAP is configured to request the communication information using a second beacon that includes a request for the communication information, or via a second management frame or a second control frame that includes a request for the communication information.

13. A non-transitory computer-readable storage medium (712) for use in conjunction with a root access point, RAP (112-3), the computer-readable storage medium storing program instructions (722), wherein, when executed by the RAP, the program instructions cause the RAP to perform operations comprising:
receiving (210) communication information (314) associated with operation of the two or more mesh access points, MAPs (112-1, 112-2), in a mesh network (128); and
allocating (212) network resources (324) in the mesh network to the two or more MAPs based at least in part on the communication information.

14. A method (200) for allocating network resources (324) in a mesh network (128), comprising:
by a root access point, RAP (112-3):
receiving (210) communication information (314) associated with operation of the two or more mesh access points, MAPs (112-1, 112-2), in the mesh network; and
allocating (212) the network resources in the mesh network to the two or more MAPs based at least in part on the communication information.

15. The method of claim 14, the network resources comprise airtimes of the two or more MAPs.
